# EUROPÄISCHE PATENTSCHRIFT

(11) **EP 1 264 749 B1**
(45) Veröffentlichungstag und Bekanntmachung des Hinweises auf die Patenterteilung: **07.12.2005**
(21) Anmeldenummer: 02012574.6
(22) Anmeldetag: 06.06.2002
(51) Int. Cl.: B60T 8/00

(54) **Verfahren zum Abgleichen eines Systems zum Messen der Gierrate eines Kraftfahrzeuges sowie ein solches System**
Compensation method for a vehicle yaw rate measuring system as well as said system
Procédé de compensation d'un système de mesure de la vitesse de lacet d'un véhicule automobile ainsi qu'un tel système

(30) Priorität: 09.06.2001 DE 10128056
(43) Veröffentlichungstag der Anmeldung: 11.12.2002
(73) Patentinhaber: Hella KGaA Hueck & Co., 59552 Lippstadt (DE)
(72) Erfinder: Gross-Bölting, Michael, 59581 Warstein (DE); Kolkmann, Dieter, 33378 Rheda-Wiedenbrück (DE)

(56) Entgegenhaltungen:
- DE-A- 19 736 199
- US-A- 5 719 790
- US-A- 5 909 949

## Beschreibung

Die vorliegende Erfindung betrifft ein Verfahren zum Abgleich eines Systems zum Messen der Gierrate eines Kraftfahrzeuges wobei dieses System einen Gierratensensor aufweist und aus dem Signal des Gierratensensors niedrigfrequente Anteile des Signals herausgefiltert werden. Ferner betrifft die Erfindung ein Verfahren zum Steuern eines Kurvenlichtes eines Kraftfahrzeuges mit einem Kurvenlichtsteuersystem wobei das Kurvenlicht mittels eines von dem Kurvenlichtsteuersystem erzeugten Signals in Abhängigkeit von der Gierrate des Kraftfahrzeuges angesteuert wird und die Gierrate von einem System zum Messen der Gierrate erfasst wird. Weiter betrifft die Erfindung ein System zum Messen der Gierrate eines Kraftfahrzeuges mit einem Gierratensensor und schließlich ein Kurvenlichtsteuersystem zum Erzeugen von Stellgrößen zum Steuern eines oder mehrerer Kurvenlichtscheinwerfer mit einem Gierratensensor, wobei der Gierratensensor über einen AD-Wandler an einer Auswerteeinheit angeschlossen ist, die Auswerteeinheit eine Schaltung zur Filterung niedrigfrequenter Anteile aus dem Sensorsignal aufweist und die Auswerteeinheit Ausgänge hat, an denen aus einem abgeglichenen Signal des Gierratensensors erzeugte Stellgrößen anliegen.

Aus der US-A-5,719,790 ist ein System zum Abgleich eines Hochpaß-gefilterten Gierratensensor-Signals, das zur Stabilitätssteuerung eines Kraftfahrzeuges dient, bekannt. Zudem ist allgemein bekannt, solche Gierratensensoren über einen AD-Wandler an eine Auswerteeinheit anzuschließen, die Ausgänge hat, an denen aus einem abgeglichenen Signal des Gierratensensors erzeugte Stellgrößen anliegen.

Aus der US-A-5,909,949 ist ein Kurvenlichtsteuersystem bekannt, bei dem das Kurvenlicht mittels eines von dem Kurvenlichtsteuersystem erzeugten Signal in Abhängigkeit von der Gierrate des Kraftfahrzeugs angesteuert wird.

Hierbei sind jedoch weitere Sensorsignale notwendig, um einen Abgleich des Systems zum Messen der Gierrate durchzuführen.

Die Gierrate, das ist die Winkelgeschwindigkeit einer Drehung eines Kraftfahrzeuges um seine Hochachse, wird bei Kraftfahrzeugen in vielfältiger Weise für Steuerungs- und oder Regelungsaufgaben verwendet. Beispiele hierfür sind Fahrzeugstabilitätsregelsysteme oder auch Kurvenlichtsteuersysteme. Das Gieren des Kraftfahrzeuges wird dazu von Gierratensensoren erfasst. Nachteil der bekannten Gierratensensoren ist, dass diese während des Betriebes eine Drift ihres Bezugswertes aufweisen, welche beispielsweise durch Temperatureinflüsse zustande kommt. In der Druckschrift DE 199 10 868 A1 wird daher ein Verfahren zum Abgleichen dieser Drift des Gierratensensors vorgeschlagen. Das in dieser Druckschrift vorgestellte System zum Messen der Gierrate weist neben dem Gierratensensor einen Temperaturfühler auf, welcher die Temperatur des Gierratensensors misst, und als dritten Sensor einen Lenkwinkelsensor, Rad-Drehzahlsensoren oder ähnliches auf. Mit dem dritten Sensor kann eine grobe Schätzung der tatsächlichen Gierrate eines Kraftfahrzeuges ermittelt werden. Mittels dieser groben Schätzung und der Temperatur des Gierratensensors wird dann der Fehler bzw. die Drift des Gierratensensors ermittelt. Die Qualität des so ermittelten abgeglichenen Gierratensignals hängt dabei maßgeblich von der Qualität der Schätzung der Drift ab. Diese Schätzung ist dabei nicht nur von dem Algorithmus zur Ermittlung der Drift aus dem Temperatursignal und dem dritten Signal abhängig sondern vielmehr auch von der Qualität des Temperatursignals und des dritten Signals selbst. Fehler bei der Messung der Temperatur und bei der Messung des dritten Signals haben unmittelbaren Einfluss auf die Schätzung der Drift des Gierratensensors.

Ein weiteres Verfahren zum Abgleichen eines Systems zum Messen der Gierrate ist in der Druckschrift WO 90/12698 offenbart. Bei dem hier offenbarten System sind Korrekturmittel vorgesehen, welche bei Stillstand des Fahrzeuges oder fehlender Querbeschleunigung (= fehlender Zentripetalbeschleunigung, d. h. Geradeausfahrt) die Drift des Bezugswertes des Gierratensensors ermitteln. Auch hier stellt sich das Problem, dass für die Ermittlung der Drift neben dem von dem Gierratensensor gelieferten Signal weitere Signale notwendig sind, die selbst wiederum fehlerbehaftet sein können.

Der Erfindung liegt daher die Aufgabe zugrunde, ein Verfahren zum Abgleichen eines Systems zum Messen der Gierrate vorzuschlagen, bei dem ohne die Verwendung weiterer Sensorsignale ein Abgleich des von dem Gierratensensor gelieferten Signals möglich ist. Der Erfindung liegt des weiteren die Aufgabe zugrunde, ein derartiges Verfahren zur Steuerung eines Kurvenlichtes zu nutzen und Systeme vorzuschlagen, welche die Anwendung eines solchen Verfahrens ermöglichen.

Diese Aufgaben werden zunächst dadurch gelöst, dass aus dem Signal des Gierratensensors niedrigfrequente Anteile des Signals herausgefiltert werden, dass das System, sobald das gefilterte Signal in einer vorbestimmten Zeitspanne einen vorbestimmten Betrag nicht überschreitet, mit dem zu einem Zeitpunkt am Ende der Zeitspanne am Ausgang des Sensors anliegenden Signal abgeglichen wird, gemäß den Merkmalen der Ansprüche 1, 8, 9 und 10.

Nach dem erfindungsgemäßen Verfahren wird im Gegensatz zu den Verfahren, die aus dem Stand der Technik bekannt sind, kein weiteres Signal zum Abgleich des Systems zum Messen der Gierrate benutzt. Der Erfindung liegen dabei drei Überlegungen zugrunde. Die erste Überlegung ist die, dass während einer Geradeausfahrt oder während des Stillstands des Fahrzeuges kein Gieren, d. h. keine Drehung um die Hochachse des Fahrzeuges erfolgt. Der während einer Geradeausfahrt oder während des Stillstandes des Fahrzeuges am Ausgang des Gierratensensors anliegende Wert kann der Bezugswert für eine durch ein Gieren des Fahrzeuges hervorgerufene Veränderung des Gierratensensorsignals sein. Sobald also festgestellt werden kann, dass das Fahrzeug geradeaus fährt oder steht (d. h. so lange das Fahrzeug nicht giert), kann das am Ausgang des Gierratensensors anliegende Signal zum Abgleichen des Systems genutzt werden. Die zweite Überlegung beruht darauf, dass die Erfahrung gezeigt hat, dass eine Geradeausfahrt mit hoher Wahrscheinlichkeit immer dann vorliegt, wenn sich das Gierratensignal über einen vorbestimmten Zeitpunkt nicht oder nur in einem gewissen Toleranzbereich ändert. Schließlich beruht die Erfindung auf der dritten Überlegung, dass die Drift eine sehr niedrige Frequenz hat, während die tatsächliche Gierrate in der Regel eine mittlere Frequenz aufweist.

Filtert man nun ausgehend von der dritten Überlegung aus dem Signal des Gierratensensors die niedrigfrequenten Anteile hinaus, so ergibt sich ein Signal, welches von der niedrigfrequenten Drift befreit ist. Darüber hinaus ist dieses Signal natürlich auch von Gleichanteilen befreit. Ist dieses Signal nun über eine vorbestimmte Zeit konstant null bzw. liegt dieses gefilterte Signal während der vorbestimmten Zeit innerhalb eines Toleranzbereiches - nämlich die Zeit, die aus der zweiten Überlegung folgt, - liegt mit sehr hoher Wahrscheinlichkeit eine Geradeausfahrt oder ein Stillstand des Fahrzeugs vor. Nach der ersten Überlegung darf in einem solchen Fall an dem Ausgang des Gierratensensors kein von dem geltenden Bezugswert abweichendes Sensorsignal anliegen, es sei denn, dass eine Drift vorliegt. Liegt also eine solche Abweichung vor, entspricht diese Abweichung von dem geltenden Bezugswert der Drift des Systems zum Messen der Gierrate und das anliegende Sensorsignal entspricht dem neuen Bezugswert.

Gemäß der Erfindung wird vorteilhaft nach dem Ablauf der Zeitspanne das gefilterte Signal dahingehend überwacht, ob es einen Nulldurchgang hat und ob es den vorbestimmten Betrag weiterhin nicht überschreitet, und dass erst in diesem Fall das System mit dem zu diesem Zeitpunkt am Ausgang des Sensors anliegenden Signal abgeglichen wird. Je nach Wahl der Höhe des vorbestimmten Betrages kann es nämlich insbesondere bei langgestreckten Kurven (z. B. auf Autobahnen) dazu kommen, dass obwohl tatsächlich eine Kurvenfahrt vorliegt, eine Geradeausfahrt erkannt wird. Dies ist immer dann der Fall, wenn die Änderung der Gierrate aufgrund der Kurvenfahrt mit einer solchen niedrigen Frequenz erfolgt, dass die Änderung des Gierratensensorsignals zwar nicht aus dem überwachten Signal herausgefiltert wird, aber dennoch innerhalb des durch den vorbestimmten Betrag festgelegten Toleranzbereiches liegt. Die Erfahrung hat jedoch gezeigt, dass dann davon ausgegangen werden kann, dass keine solche Kurvenfahrt mit großem Kurvenradius, sondern vielmehr eine Geradeausfahrt oder ein Stillstand des Fahrzeuges vorliegt, wenn nach der vorbestimmten Zeitspanne ein Vorzeichenwechsel des gefilterten Signals oder ein Erreichen des Nullpunkts durch das gefilterte Signal vorliegt. Ein solcher Vorzeichenwechsel entspricht dabei einem Wechsel der Drehrichtung des Fahrzeuges um seine Hochachse.

Zum Herausfiltern der niedrigfrequenten Anteile kann gemäß der Erfindung ein Hochpass vorteilhafter jedoch ein Bandpass benutzt werden. Gleichzeitig empfiehlt es sich, das zum Abgleich verwendete Signal des Gierratensensors mittels eines Tiefpasses zu filtern. Die Tiefpassfilterung des zum Abgleich des Sensors verwendeten Signals des Gierratensensors ist empfehlenswert, da beispielsweise durch Vibrationen des Fahrzeuges hochfrequente Störungen in dem Signal des Gierratensensors auftreten können, welche das eigentliche Signal des Gierratensensors verfälschen. Im übrigen ist es empfehlenswert, dieses tiefpassgefilterte Gierratensignal auch als nutzbares Signal nach einem Abgleich am Ausgang des Systems zu messen und der Gierrate des Fahrzeuges zur Verfügung zu stellen.

Beim Abgleich des Systems kann ein Bezugswert auf das zu diesem Zeitpunkt am Ausgang des Tiefpasses anliegende Signal festgesetzt werden. Bei diesem einfachen Abgleich wird der alte durch die Drift verfälschte Bezugswert des Systems durch den neuen festgestellten Bezugswert ersetzt. Alternativ zu dieser Möglichkeit des Abgleichs kann der alte Bezugswert in Größe eines vorbestimmten Schrittes auf das festgestellte zum Zeitpunkt des Abgleichs am Tiefpass anliegende Signal angenähert werden. Die Erfahrung hat nämlich gezeigt, dass die Werte, um die das System zum Messen der Gierrate eines Fahrzeuges von dem Bezugswert abdriftet, in der Regel relativ klein sind. Es ist daher völlig ausreichend, wenn der Bezugswert langsam an die tatsächliche Drift angepasst wird. Dies hat den Vorteil, dass große Sprünge der Systemwerte vermieden werden, welche unter Umständen zu unangenehmen Schwingungen des Systems bzw. nachgeordneter Systeme führen könnte.

Erfindungsgemäß kann der Abgleich des Sensorsignals digital erfolgen wozu das Signal des Gierratensensors digitalisiert, bevor es mittels des Bandpasses oder des Tiefpasses gefiltert wird. Für die Digitalisierung ist es in der Regel notwendig, dass das Signal zuvor von einem Anti-Aliasing-Filter gefiltert wird.

Bei Versuchen wurde festgestellt, dass als vorbestimmte Zeitspanne eine Zeit von 5 Sekunden ausreichend sein kann. Der vorbestimmte Betrag, den das gefilterte Signal maximal erreichen darf, so dass eine Geradeausfahrt oder ein Stillstand des Fahrzeuges erkannt werden können, beträgt nach der Erfahrung bei dem verwendeten Sensortyp 25 mV.

Ein Verfahren zum Steuern eines Kurvenlichtes eines Kraftfahrzeuges mittels eines Kurvenlichtsteuersystems, wobei das Kurvenlicht mittels eines von dem Kurvenlichtsteuersystem erzeugten Signals in Abhängigkeit von der Gierrate des Kraftfahrzeuges angesteuert wird und die Gierrate von einem System zum Messen der Gierrate erfasst wird, ist aus dem Stand der Technik nämlich aus der Druckschrift DE 198 21 617 C1 bekannt. Ein solches Verfahren wird gemäß der Erfindung dadurch verbessert, dass das System zum Messen der Gierrate mit einem vorbeschriebenen Verfahren abgeglichen wird.

Ein System zum Messen der Gierrate eines Kraftfahrzeuges mit einem Gierratensensor wird gemäß der Erfindung dadurch verbessert, dass der Ausgang des Gierratensensors mit einem A/D-Wandler, und der Ausgang des A/D-Wandlers mit einer Auswerteeinheit verbunden ist, dass in der Auswerteeinheit parallel zueinander ein Bandpassfilter und ein Tiefpassfilter realisiert sind, an deren Eingängen das Ausgangssignal des A/D-Wandlers anliegt, und dass die Auswerteeinheit einen Ausgang hat, an dem ein abgeglichenes Sensorsignal anliegt.

Ein Kurvenlichtsteuersystem zum Erzeugen einer oder mehrerer Stellgrößen zum Steuern eines oder mehrerer Kurvenlichtscheinwerfer mit einem Gierratensensor wird schließlich dadurch verbessert, dass der Gierratensensor über einen A/D-Wandler an eine Auswerteeinheit angeschlossen ist, dass die Auswerteeinheit eine Schaltung zur Filterung niedrigfrequenter Anteile aus dem Sensor aufweist und dass die Auswerteeinheit Ausgänge hat, an denen aus einem abgeglichenen Signal des Gierratensensors erzeugte Stellgrößen anliegen.

Bei einem solchen Kurvenlichtsteuersystem können gemäß der Erfindung in der Auswerteeinheit vorteilhaft als integrierte Schaltung ausgeführte parallel zueinander ein Bandpassfilter als Schaltung zur Filterung der niedrigfrequenten Teile und ein Tiefpassfilter realisiert sein, deren Eingänge mit dem Ausgang des AD-Wandlers verbunden sind, wobei der Ausgang des Bandpassfilters und des Tiefpassfilters an einer Überwachungs- und Einstellschaltung der Auswerteeinheit angeschlossen ist, welche den Ausgang des Bandpasses überwacht und den Bezugswert einstellt. Der Ausgang der Überwachungs- und Einstellschaltung und der Ausgang des Tiefpassfilters sind an einer Steuerschaltung zur Erzeugung der Stellgrößen angeschlossen und die Stellgrößen sind über Ausgänge aus der Auswerteeinheit herausgeführt.

Ein Ausführungsbeispiel wird anhand der Zeichnung näher beschrieben. Darin zeigt
- Fig. 1: verschiedene Signalverläufe bei einem störungsfrei arbeitendem Gierratensensor;
- Fig. 2: Signalverläufe bei einem Gierratensensor, welcher durch Fahrzeugschwingungen gestört ist;
- Fig. 3: Signalverläufe bei einem Gierratensensor, der eine Störung durch eine Nullpunktdrift hat;
- Fig. 4: zeigt ein Blockschaltbild zur Funktionsweise eines Systems zum Messen der Gierrate;
- Fig. 5: zeigt ein Flussdiagramm zum Abgleichen eines Systems zum Messen der Gierrate;
- Fig. 6: zeigt ein Flussdiagramm zur Funktionsweise eines Kurvenlichtsteuersystems.

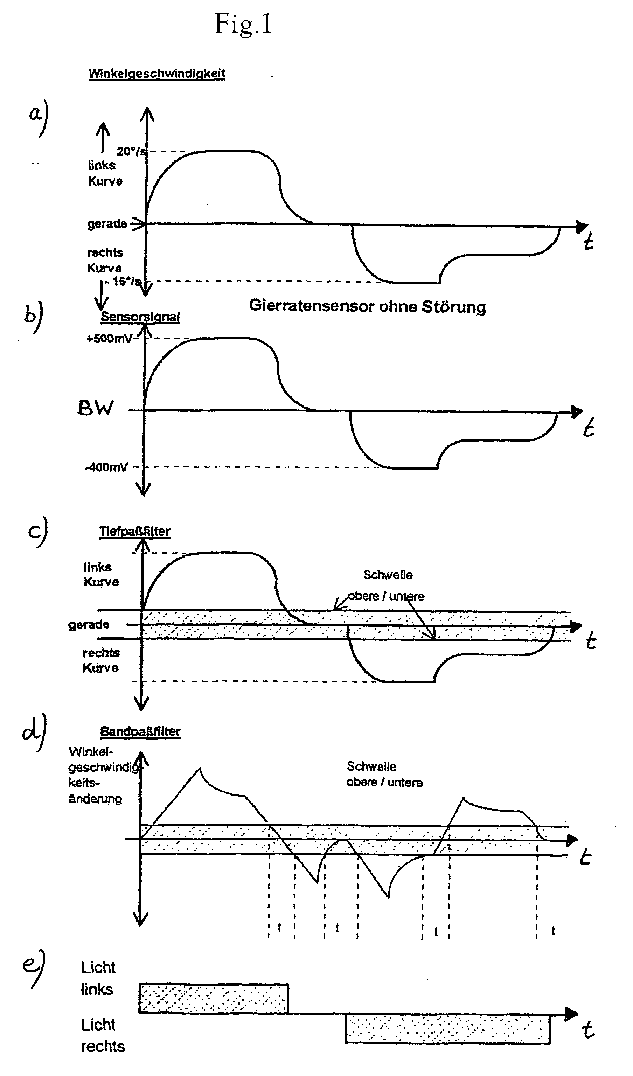

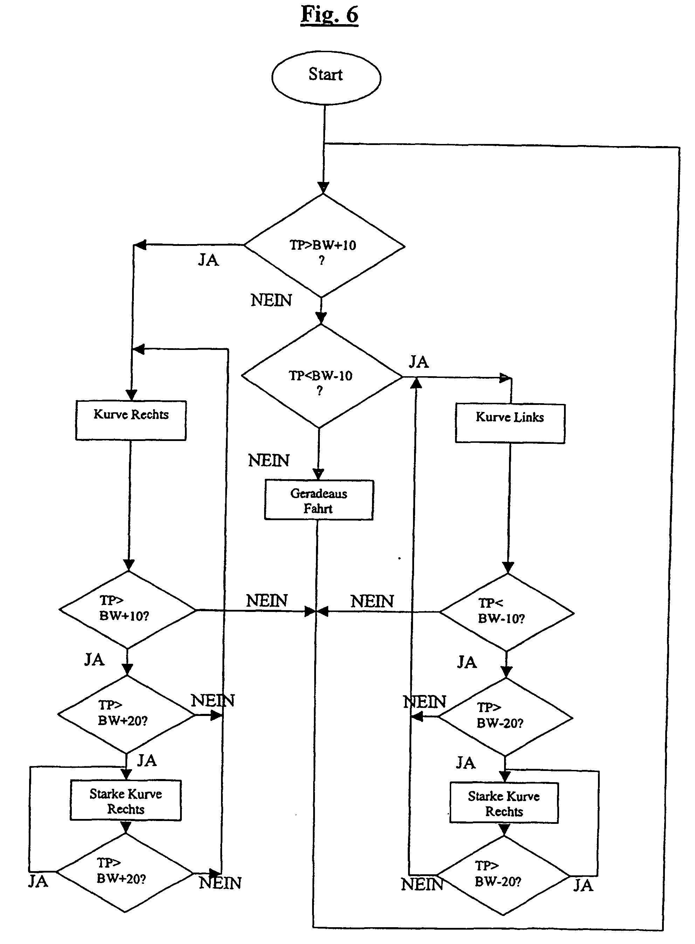

Das Geschwindigkeitszeitdiagramm der Fig. 1a zeigt typische Verläufe der Winkelgeschwindigkeit bei Kurvenfahrten. Der nach oben hin aufgetragene positive Teil des Verlaufes steht dabei für eine Linkskurve bzw. ein Gieren des Fahrzeuges nach links, während der nach unten aufgetragene Teil des Verlaufes einer Rechtskurve bzw. einem Gieren des Fahrzeuges nach rechts entspricht. Dieses Gieren des Fahrzeuges wird von einem Gierratensensor gemessen. Das Ausgangssignal des Gierratensensors ist in Fig. 1b dargestellt. In dem in Fig. 1 dargestellten Fall bildet der Gierratensensor das Gieren des Fahrzeuges ohne Störungen ab. Es ergeben sich daher bei der gewählten Skalierung keine Abweichungen im Verlauf der Diagramme Fig. 1a und Fig. 1b. Das Ausgangssignal des Gierratensensors wird mittels eines Tiefpasses gefiltert. Das Ausgangssignal des Tiefpassfilters ist in Fig. 1c über der Zeit aufgetragen. Da das Ausgangssignal des Gierratensensors nur niedrige und mittlere Frequenzen enthält und deshalb von dem Tiefpassfilter keine Signalanteile aus dem Sensorsignal herausgefiltert werden, entspricht das Ausgangssignal des Tiefpassfilters dem Signal des Gierratensensors. In der Darstellung der Figur 1c ist ein Bereich schraffiert dargestellt. Die obere bzw. die untere Grenze bilden dabei Schwellwerte, durch die Bereiche definiert werden, welche einer annähernden Geradeausbewegung bzw. Kurvenfahrten entsprechen. Näheres hierzu wird später anhand der Fig. 6 erläutert.

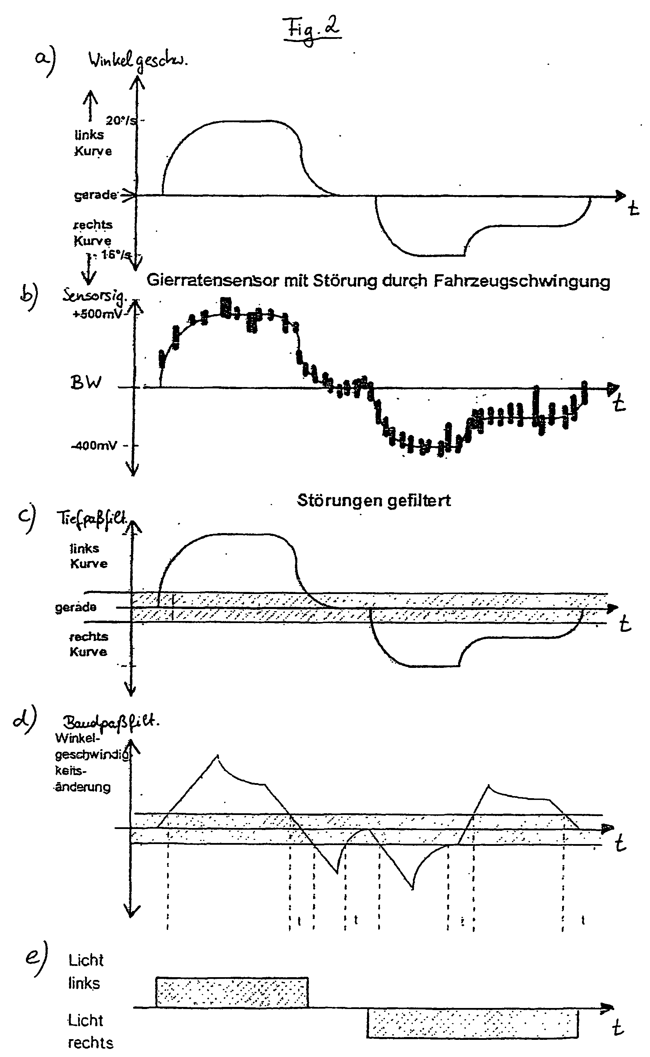

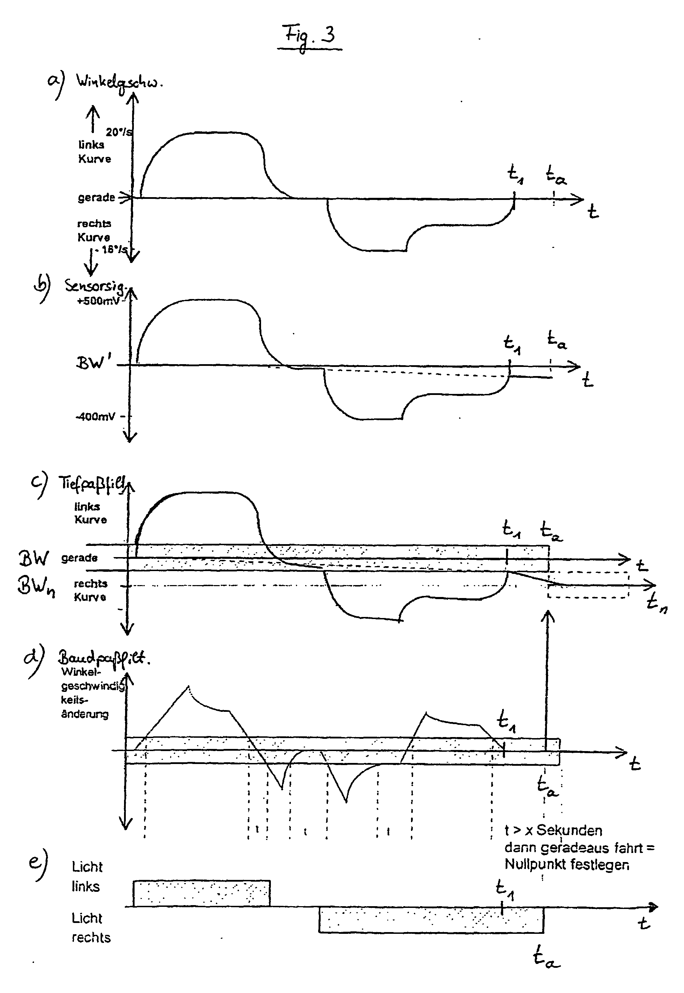

Das Ausgangssignal des Gierratensensors aus Fig. 1b wird jedoch nicht nur von einem Tiefpass gefiltert, sondern auch von einem Bandpass. Das Ausgangssignal des Bandpasses ist in Fig. 1d dargestellt. Diesem Signal fehlen sowohl die niedrigen als auch die hohen Frequenzen. Daher unterscheidet sich das Ausgangssignal des Bandpassfilters von dem des Tiefpassfilters gemäß Fig. 1c. Das Ausgangssignal des Bandpassfilters ist in den Figuren 1 und 2 nur der Vollständigkeit halber dargestellt, von Bedeutung ist es lediglich für den in Fig. 3 dargestellten Verlauf des Ausgangssignals des Gierratensensors, so dass später auf das Ausgangssignal des Bandpassfilters näher eingegangen wird.

Figur 1e zeigt schließlich einen möglichen Verlauf eines Stellgrößensignals beispielsweise zum Ansteuern von Kurvenlichtscheinwerfern. Es werden hier drei verschiedene Zustände erkannt, eine Kurvenfahrt nach links im ersten Bereich, welches zu einem Stellsignallicht links führt, einen Zustand Geradeausfahrt im mittleren Bereich und einen Zustand Kurvenfahrt rechts, welches zu einem Stellsignallicht rechts führt, das im dritten Bereich dargestellt ist.

Die in Fig. 2 dargestellten Signalverläufe entsprechen weitgehend denen, die in Fig. 1 dargestellt sind. Durch Vibrationen des Fahrzeuges ist jedoch das Ausgangssignal des Gierratensensors gestört. Diese Störungen überlagern sich mit dem im Übrigen korrekt gemessenen Signal des Gierratensensors und sind als Ausschlag ausgehend von dem eigentlichen Ausgangssignal in Fig. 2b dargestellt. Das hochfrequente Störungssignal wird sowohl durch den Tiefpassfilter als auch durch den Bandpassfilter aus dem Sensorsignal der Figur 2b herausgefiltert wie man an den Verläufen der Fig. 2c und 2d erkennen kann, welche den Fig. 1c und 1d entsprechen.

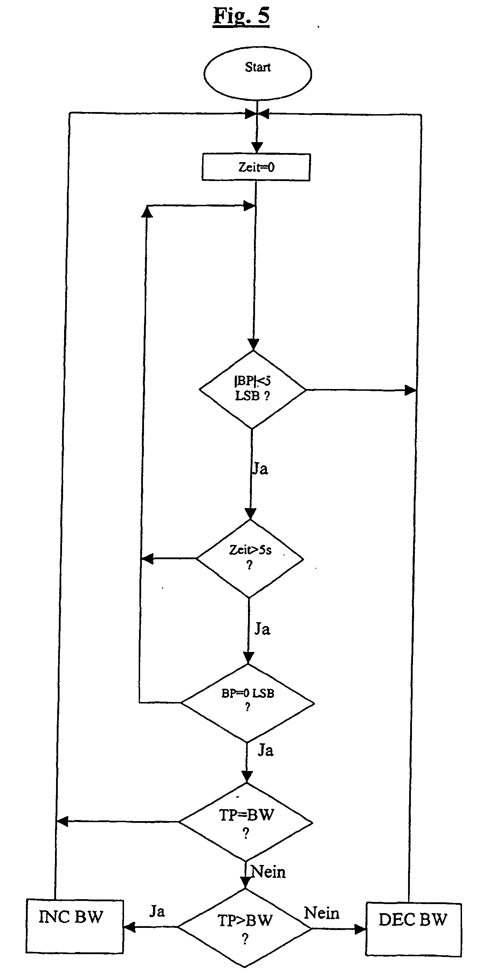

Die in Fig. 3 dargestellten Verläufe unterscheiden sich dagegen von den in Fig. 1 dargestellten dadurch, dass der Gierratensensor eine Drift hat, wodurch die gemessene Gierrate entsprechend dem Ausgangssignal des Gierratensensors von der tatsächlichen Gierrate abweicht. Im vorliegenden Fall driftet der Bezugswert des Gierratensensors nach unten ab. Dieses ist durch die gestrichelte Gerade in Fig. 3b und 3c angedeutet. Im Gegensatz zu dem Ausgangssignal des Tiefpassfilters, welches in Fig. 3c dargestellt ist, ist das Ausgangssignal des Bandpassfilters, in Fig. 3d dargestellt, von der Drift bereinigt. Die Drift hat nämlich eine recht niedrige Frequenz, so dass die Signalanteile, welche die Drift im Ausgangssignal des Gierratensensors abbilden mittels des Bandpasses aus dem Sensorsignal herausgefiltert werden. Der Verlauf des Ausgangssignals des Bandpasses gemäß der Figur 3d entspricht daher den entsprechenden Signalverläufen der Figuren 1d und 2d. Nachdem das Fahrzeug die Rechtskurve zum Zeitpunkt t₁ verlassen hat, die tatsächliche Winkelgeschwindigkeit bzw. die tatsächliche Gierrate also wieder Null ist, zeigt wegen der Drift der Gierratensensor nach dem Zeitpunkt t₁ weiterhin ein Signal an, welches von dem Bezugswert BW abweicht (siehe Fig. 3b). Dieses führt auch an dem Tiefpassfilter (Fig. 3c) nach dem Zeitpunkt t₁ zu einem Signal. Dieses Signal liegt dabei außerhalb des Toleranzbereiches, so dass das System weiterhin eine Rechtskurve erkennt wie auch in Fig. 3e dargestellt ist. Anhand des Bandpassfilterausgangssignals wird nun erkannt, dass tatsächlich aber eine Geradeausfahrt vorliegt. Nach dem erfindungsgemäßen Verfahren wird nämlich das von den niederfrequenten Anteilen befreite Signal dahingehend überwacht, ob es eine bestimmte Zeit einen vorbestimmten Betrag nicht überschreitet. Dieser vorbestimmte Betrag entspricht dabei in der Figur 3d dem schraffierten Intervall um die Zeitachse. Die Zeitspanne zwischen den Zeitpunkten t₁ und tₐ reicht dabei aus, dass die Geradeausfahrt erkannt wird. Diese Erkennung erfolgt im Zeitpunkt tₐ, was zu einem Abgleich des Systems führt. Aufgrund dieses Abgleichs wird der Bezugswert des am Tiefpassfilterausgang anliegenden Signals nach unten auf das momentan am Tiefpassfilterausgang liegende Signal verschoben. Dadurch ergibt sich für das Tiefpassfiltersignal eine neue Zeitachse t welche dem neuen Bezugswert BWₙ entspricht Wie dieser Abgleich im Einzelnen vor sich geht, wird später anhand der Fig. 5 näher beschrieben.

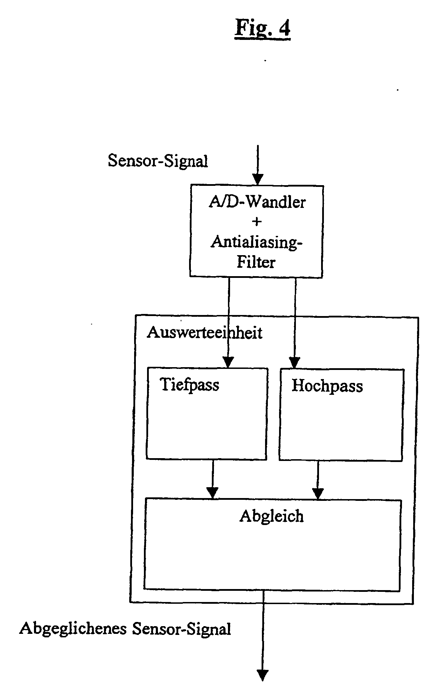

Das in Fig. 4 schematisch dargestellte System zum Messen der Gierrate eines Fahrzeuges weist als Eingangssignal das von dem Gierratensensor kommende Signal auf. Dieses Signal wird von einem A/D-Wandler digitalisiert und durch einen Anti-Aliasing-Filter geschickt. Das so bearbeitete Signal wird in eine Auswerteeinheit geführt. In der Auswerteeinheit sind parallel zueinander ein Tiefpass und ein Hochpass realisiert, welche die für den Abgleich notwendigen Signale liefern. Als Ausgangsgröße liefert die Auswerteeinheit das abgeglichene Sensorsignal.

Anhand der Fig. 5 wird nun näher beschrieben, wie das Gierratensensorsignal abgeglichen wird. Dabei muss zunächst immer erkannt werden, ob eine Geradeausfahrt vorliegt oder nicht. Nach dem Start des Algorithmus wird ein Zeitzähler auf Null gesetzt. Anschließend wird das Ausgangssignal des Hochpasses abgefragt, wobei dieses kleiner als ein bestimmter Betrag sein muss. Ist das Ausgangssignal des Bandpasses größer als dieser Betrag, wird der Algorithmus neu gestartet. In dem dargestellten Beispiel hat der Betrag eine Höhe von 5 LSB (= Least Significant Bit) welches bei der gewählten Auflösung bei Digitalisierung des Sensorsignalausgangs einer Spannung von 5 mV entspricht. Im folgenden Schritt wird abgefragt, ob seit der Initialisierung des Zeitzählers 5 Sekunden vergangen sind. Sind diese 5 Sekunden nicht vergangen, wird erneut der Ausgang des Bandpasses dahingehend abgefragt, ob das Ausgangssignal des Bandpasses kleiner als der vorgegebene Betrag von 5 mV ist. Sobald jedoch eine Zeit vergangen ist, die größer ist als 5 Sekunden, erfolgt eine weitere Abfrage dahingehend, ob das Ausgangssignal des Bandpasses den Wert 0 erreicht. Diese weitere Abfrage ist sinnvoll, um mit größerer Genauigkeit eine nicht gewünschte langgestreckte Kurve von einer tatsächlichen Geradeausfahrt bzw. einem Stillstand des Fahrzeuges unterscheiden zu können. Sobald der Ausgang des Bandpasses einen Wert von 0 erreicht, wird geprüft, ob der Ausgang des Tiefpasses dem aktuellen Bezugswert entspricht. Ist dies der Fall, liegt keine Drift vor. Dann werden keine weiteren Einstellungen vorgenommen und der Algorithmus wird von neuem gestartet. Weicht jedoch der Bezugswert von dem an dem Tiefpass aktuell anliegenden Wert ab, liegt eine Drift vor. Ist der am Tiefpass anliegende Wert kleiner als der Bezugswert, liegt eine negative Drift vor, ist der am Tiefpass anliegende Wert größer als der Bezugswert liegt eine positive Drift vor. Entsprechend wird dann der Bezugswert entweder um einen vorbestimmten Schritt inkrementiert oder dekrementiert, so dass der Bezugswert langsam an die Drift angepasst wird und ein Abgleich des Systems zum Messen der Gierrate erfolgt.

Der zum Erkennen einer Kurven- bzw. einer Geradeausfahrt angewandte Algorithmus ist in Fig. 6 als Flussdiagramm dargestellt. Nach dem Start des Algorithmus erfolgt zunächst eine Abfrage, ob der am Tiefpass anliegende Wert des Signals größer ist als der Bezugswert plus 10 LSB (BW + 10 LSB), was ungefähr dem Bezugswert plus 50 mV entspricht. Ist das Signal, welches am Ausgang des Tiefpasses anliegt, größer als dieser Wert, liegt eine Rechtskurve vor, welche von dem Algorithmus erkannt wird. Ist die Rechtskurve erkannt, wird geprüft, ob der am Tiefpassausgang anliegende Wert weiterhin den Schwellwert von BW + 10 LSB übersteigt. Ist dies weiterhin der Fall, wird zusätzlich abgefragt, ob der am Tiefpass anliegende Wert einen Schwellwert von BW + 20 LSB übersteigt. Ein solcher Schwellwert wird erreicht, falls eine starke Rechtskurve vorliegt. Liegt eine solche starke Rechtskurve nicht oder nicht mehr vor, erkennt das System zunächst automatisch eine normale Rechtskurve bevor eine Abfrage erfolgt, ob die Rechtskurve inzwischen verlassen wurde. Dies ist dann der Fall, sobald der Schwellwert von BW + 10 LSB nicht mehr erreicht wird. Wird dieser Schwellwert nicht mehr erreicht, wird der Algorithmus von neuem durchlaufen. Wird bei der eingangs gestellten Frage, ob der Schwellwert BW + 10 LSB erreicht wird, kein positives Ergebnis erzielt, wird in einem weiteren Schritt abgefragt, ob der Schwellwert für eine Linkskurve, das ist der Schwellwert BW - 10 LSB, erreicht wird. Wird der Wert BW - 10 LSB unterschritten, wird eine Linkskurve erkannt. Auch hier erfolgt dann eine Abfrage, ob eine starke Linkskurve vorliegt. Die dabei durchlaufene Prozedur entspricht der Erkennung einer starken Rechtskurve. Die Abfragen sind symmetrisch zu dieser Prozedur ausgestaltet, so dass auf eine weitere Beschreibung verzichtet werden kann. Wird die Linkskurve verlassen, wird auch hier der Algorithmus von neuem gestartet.

Liegt nach dem Start des Algorithmus weder eine Rechts- noch eine Linkskurve vor, wird eine Geradeausfahrt erkannt. Nach dem in Fig. 6 dargestellten Algorithmus lassen sich also fünf erkennbare Zustände unterscheiden, und zwar starke Kurve rechts, Kurve rechts, Geradeausfahrt, Kurve links, starke Kurve links. Die Erkennung dieser Zustände kann dann zur Steuerung beispielsweise von Kurvenlichtscheinwerfern benutzt werden.

## Patentansprüche

1. Verfahren zum Abgleichen eines Systems zum Messen der Gierrate eines Kraftfahrzeugs, wobei das System einen Gierratensensor aufweist und aus dem Signal des Gierratensensors niedrigfrequente Anteile des Signals herausgefiltert werden, **dadurch gekennzeichnet, dass** das System, sobald das gefilterte Signal in einer vorbestimmten Zeitspanne (tₐ - tₙ) einen vorbestimmten Betrag nicht überschreitet, mit dem zu einem Zeitpunkt (tₐ) am Ende der Zeitspanne (tₐ - tₙ) am Ausgang des Sensors anliegenden Signal abgeglichen wird.

2. Verfahren nach Anspruch 1, **dadurch gekennzeichnet, dass** nach dem Ablauf der Zeitspanne (tₐ - tₙ) das gefilterte Signal dahingehend überwacht wird, ob es einen Nulldurchgang hat und ob es den vorbestimmten Betrag weiterhin nicht überschreitet, und dass erst in diesem Fall das System mit dem zu diesem Zeitpunkt am Ausgang des Sensors anliegenden Signal abgeglichen wird.

3. Verfahren nach einem Ansprüche 1 oder 2, **dadurch gekennzeichnet, dass** der niedrigfrequente Anteil mit einem Hochpass, vorteilhafter jedoch mittels eines Bandpasses aus dem Sensorsignal herausgefiltert wird und dass das zum Abgleich verwendete Signal des Gierratensensors mittels eines Tiefpasses gefiltert wird.

4. Verfahren nach Anspruch 3, **dadurch gekennzeichnet, dass** zum Abgleichen des Systems ein Bezugswert (BW) auf das zu diesem Zeitpunkt (tₐ) am Ausgang des Tiefpasses anliegende Signal festgesetzt wird.

5. Verfahren nach Anspruch 4, **dadurch gekennzeichnet, dass** zum Abgleichen des Systems der Bezugswert (BW) in einem vorbestimmten Schritt an das zu diesem Zeitpunkt (tₐ) am Ausgang des Tiefpasses anliegende Signal angenähert wird.

6. Verfahren nach einem der Ansprüche 3 bis 5, **dadurch gekennzeichnet, dass** das analoge Signal des Gierratensensors digitalisiert wird, bevor es mittels des Bandpasses oder des Tiefpasses gefiltert wird.

7. Verfahren nach einem der Ansprüche 1 bis 6, **dadurch gekennzeichnet, dass** die vorbestimmte Zeitspanne 5s ist.

8. Verfahren zum Steuern eines Kurvenlichts eines Kraftfahrzeugs mittels eines Kurvenlichtsteuersystems, wobei das Kurvenlicht mittels eines von dem Kurvenlichtsteuersystem erzeugten Signals in Abhängigkeit von der Gierrate des Kraftfahrzeugs angesteuert wird und die Gierrate von einem System zum Messen der Gierrate erfasst wird, **dadurch gekennzeichnet, dass** das System zum Messen der Gierrate mit einem Verfahren gemäß einem der Ansprüche 1 bis 7 abgeglichen wird.

9. System zum Messen der Gierrate eines Kraftfahrzeugs mit einem Gierratensensor, **dadurch gekennzeichnet, dass** der Ausgang des Gierratensensors mit einem AD-Wandler und der Ausgang des AD-Wandlers mit einer Auswerteeinheit verbunden ist, dass in der Auswerteeinheit parallel zueinander ein Bandpassfilter und ein Tiefpassfilter realisiert sind, an deren Eingängen das Ausgangssignal des AD-Wandlers anliegt, und dass die Auswerteeinheit einen Ausgang hat, an dem ein abgeglichenes Sensorsignal anliegt.

10. Kurvenlichtsteuersystem zum Erzeugen einer oder mehrerer Stellgrößen zum Steuern eines oder mehrerer Kurvenlichtscheinwerfer mit einem Gierratensensor, wobei der Gierratensensor über einen AD-Wandler an einer Auswerteeinheit angeschlossen ist, die Auswerteeinheit eine Schaltung zur Filterung niedrigfrequenter Anteile aus dem Sensorsignal aufweist und die Auswerteeinheit Ausgänge hat, an denen aus einem abgeglichenen Signal des Gierratensensors erzeugte Stellgrößen anliegen, **dadurch gekennzeichnet, dass** in der Auswerteeinheit parallel zueinander ein Bandpassfilter als Schaltung zur Filterung der niedrigfrequenten Anteile und ein Tiefpassfilter realisiert sind, deren Eingänge mit dem Ausgang des AD-Wandlers verbunden sind, dass der Ausgang des Bandpassfilters und der Ausgang des Tiefpassfilters an einer Überwachungs- und Einstellschaltung der Auswerteeinheit angeschlossen sind, dass der Ausgang der Überwachungs- und Einstellschaltung und der Ausgang des Tiefpassfilters an einer Steuerschaltung zur Erzeugung der Stellgrößen angeschlossen sind und dass die Stellgrößen über Ausgänge aus der Auswerteeinheit herausgeführt sind.

## Claims

1. Compensation method for a vehicle yaw rate measuring system, in which the system has a yaw rate sensor and low frequency parts of the signal are filtered out of the signal of the yaw rate sensor, **characterised in that**, if the filtered signal does not exceed a predetermined amount in a predetermined period of time (tₐ - tₙ), the system is compensated with the signal at the output of the sensor at a time (tₐ) at the end of the period of time (tₐ - tₙ).

2. Method according to claim 1, **characterised in that** the filtered signal is monitored to that effect after the period of time (tₐ - tₙ) has expired, to see whether it has a zero crossing and whether it still does not exceed the predetermined amount, and that only in this case the system is compensated with the signal at the output of the sensor at this time.

3. Method according to one of claims 1 or 2, **characterised in that** the low frequency part is filtered out of the sensor signal with a high pass, but more advantageously by means of a band pass, and that the signal of the yaw rate sensor used for compensation is filtered by means of a low pass.

4. Method according to claim 3, **characterised in that** to compensate the system a reference value (BW) is set at the signal at the output of the low pass at this time (tₐ).

5. Method according to claim 4, **characterised in that** to compensate the system the reference value (BW) is brought closer to the signal at the output of the low pass at this time (tₐ) in a predetermined step.

6. Method according to one of claims 3 to 5, **characterised in that** the analogue signal of the yaw rate sensor is digitalised, before it is filtered by means of the band pass or low pass.

7. Method according to one of claims 1 to 6, **characterised in that** the predetermined period of time is 5 s.

8. Method for controlling a curved light of a vehicle by means of a curved light control system, in which the curved light is controlled by means of a signal produced by the curved light control system depending on the yaw rate of the vehicle and the yaw rate of a system for measuring the yaw rate is recorded, **characterised in that** the system for measuring the yaw rate is compensated with a method according to one of claims 1 to 7.

9. System for measuring the yaw rate of a vehicle with a yaw rate sensor, **characterised in that** the output of the yaw rate sensor is connected to an AD converter and the output of the AD converter is connected to an evaluation unit, that a band pass filter and a low pass filter are made parallel to each other in the evaluation unit, at the inputs of which there is the output signal of the AD converter, and that the evaluation unit has an output, at which there is a compensated sensor signal.

10. Curved light control system for producing one or several control variables for controlling one or several curved light headlights with a yaw rate sensor, in which the yaw rate sensor is connected to an evaluation unit through an AD converter, the evaluation unit has a circuit for filtering low frequency parts from the sensor signal and the evaluation unit has outputs, at which there are control variables produced from a compensated signal of the yaw rate sensor, **characterised in that** a low pass filter and a band pass filter as a circuit for filtering the low frequency parts are made parallel to each other in the evaluation unit, the inputs of which are connected to the output of the AD converter, that the output of the band pass filter and the output of the low pass filter are connected to a monitoring and adjustment circuit of the evaluation unit, that the output of the monitoring and adjustment circuit and the output of the low pass filter are connected to a control circuit to produce control variables and that the control variables are taken from the evaluation unit through outputs.

## Revendications

1. Procédé de compensation d'un système de mesure de la vitesse de lacet d'un véhicule automobile, selon lequel le système possède un capteur de la vitesse de lacet, et des composantes à basses fréquences sont séparées, par filtrage, du signal du capteur de la vitesse de lacet, **caractérisé en ce que**, dès que le signal filtré ne dépasse pas une valeur absolue prédéterminée pendant un intervalle de temps prédéterminé (tₐ - tₙ), le système est réglé sur le signal présent à un instant (tₐ) à la fin de l'intervalle de temps (tₐ - tₙ) à la sortie du capteur.

2. Procédé selon la revendication 1, **caractérisé en ce qu'**après l'écoulement de l'intervalle de temps (tₐ - tₙ), un contrôle du signal filtré est exécuté pour déterminer s'il présente un passage par zéro et s'il ne dépasse pas en outre la valeur absolue prédéterminée, et que seulement dans ce cas, le système est compensé avec le signal présent à cet instant à la sortie du capteur.

3. Procédé selon l'une des revendications 1 ou 2, **caractérisé en ce que** la composante à basse fréquence est séparée, par filtrage, du signal du capteur au moyen d'un filtre passe-haut, mais avantageusement au moyen d'un filtre passe-bande, et que le signal, utilisé pour le réglage de compensation, du capteur de la vitesse de lacet est filtré au moyen d'un filtre passe-bas.

4. Procédé selon la revendication 3, **caractérisé en ce que** pour la compensation du système, une valeur de référence (BW) est fixée pour le signal présent à cet instant (tₐ) à la sortie du filtre passe-bas.

5. Procédé selon la revendication 4, **caractérisé en ce que** pour le réglage du système, la valeur de référence (BW) est rapprochée, lors d'une étape prédéterminée, du signal présent à cet instant (tₐ) à la sortie du filtre passe-bas.

6. Procédé selon l'une des revendications 3 à 5,
**caractérisé en ce que** le signal analogique du capteur de vitesse de lacet est numérisé avant d'être filtré au moyen du filtre passe-bande ou du filtre passe-bas.

7. Procédé selon l'une des revendications 1 à 6, **caractérisé en ce que** l'intervalle de temps prédéterminé est égal à 5 s.

8. Procédé pour commander un éclairage en courbe d'un véhicule automobile au moyen d'un système de commande d'éclairage en courbe, selon lequel l'éclairage en courbe est commandé au moyen d'un signal, produit par le système de commande d'éclairage en courbe, en fonction de la vitesse de lacet du véhicule automobile, et la vitesse de lacet est détectée par un système de mesure de la vitesse de lacet, **caractérisé en ce que** le système de mesure de la vitesse de lacet est compensé au moyen d'un procédé selon l'une des revendications 1 à 7.

9. Système de mesure de la vitesse de lacet d'un véhicule automobile comportant un capteur de la vitesse de lacet, **caractérisé en ce que** le capteur de la vitesse de lacet est relié à un convertisseur analogique / numérique et que la sortie du convertisseur analogique / numérique est reliée à une unité d'évaluation, que dans l'unité d'évaluation sont formés, parallèlement l'un à l'autre, un filtre passe-bande et un filtre passe-bas, aux entrées desquels est appliqué le signal de sortie du convertisseur analogique / numérique, et que l'unité d'évaluation possède une sortie, sur laquelle est présent un signal réglé du capteur.

10. Système de commande d'éclairage en courbe pour produire une ou plusieurs grandeurs de réglage pour commander un ou plusieurs phares d'éclairage en courbe avec un capteur de la vitesse de lacet, et dans lequel le capteur de la vitesse de lacet est raccordé à une unité d'évaluation par l'intermédiaire d'un convertisseur analogique / numérique, l'unité d'évaluation comporte un circuit de filtrage de composants à basses fréquences à partir du signal de capteur et l'unité d'évaluation possède des sorties, au niveau desquelles sont présentes des grandeurs de réglage produites à partir d'un signal réglé du capteur de la vitesse de lacet, **caractérisé en ce que** dans l'unité d'évaluation sont formés, parallèlement l'un à l'autre, un filtre passe-bande en tant que circuit pour filtrer les composantes à basses fréquences et un filtre passe-bas, dont les entrées sont reliées à la sortie du convertisseur analogique / numérique, que la sortie du filtre passe-bande et la sortie du filtre passe-bas sont raccordées à un circuit de contrôle et de réglage de l'unité d'évaluation et que la sortie du circuit de contrôle et de réglage et la sortie du filtre passe-bas sont raccordées à un circuit de commande servant à produire des grandeurs de réglage et que les grandeurs de réglage sont extraites de l'unité d'évaluation au moyen de sorties.
